# FASCICULE DE BREVET EUROPEEN

(11) **EP 3 426 452 B1**
(45) Date de publication et mention de la délivrance du brevet: **12.02.2020**
(21) Numéro de dépôt: 17713709.8
(22) Date de dépôt: 07.03.2017
(51) Int. Cl.: B29B 11/16, B29C 70/38, B29B 15/12

(54) **PROCÉDÉ DE RÉALISATION DE PRÉFORMES AVEC APPLICATION D'UN LIANT SUR FIBRE SÈCHE, ET MACHINE CORRESPONDANTE**
VERFAHREN ZUR HERSTELLUNG VON VORFORMLINGEN MIT ANWENDUNG EINES BINDEMITTELS AUF TROCKENER FASER UND ENTSPRECHENDE MASCHINE
PROCESS FOR PRODUCING PREFORMS WITH APPLICATION OF A BINDER TO DRY FIBER, AND CORRESPONDING MACHINE

(30) Priorité: 07.03.2016 FR 1670088
(43) Date de publication de la demande: 16.01.2019
(73) Titulaire: Coriolis Group, 56530 Quéven (FR)
(72) Inventeur: CAFFIAU, Johann, 56700 Hennebont (FR); JOB, Sophie, 56690 Nostang (FR)
(86) Numéro de dépôt international: PCT/FR2017/000043
(87) Numéro de publication internationale: WO 2017/153643

(56) Documents cités:
- EP-A1- 0 452 186
- WO-A1-88/10154
- DE-A1-102012 007 439
- FR-A1- 2 882 681
- FR-A1- 3 016 827

## Description

La présente invention concerne un procédé de réalisation de préformes par application d'un liant sur des fibres sèches et par drapage desdites fibres. La présente invention concerne également un procédé de réalisation de pièces en matériau composite à partir de telles préformes, et une machine de drapage de fibres pour la réalisation de telles préformes.

Il est connu des machines d'application ou de drapage de fibres pour le drapage automatique sur un outillage de drapage, tel qu'un moule mâle ou femelle, d'une bande large formée d'une ou plusieurs fibres, en particulier des fibres continues plates de type rubans, couramment appelées mèches, notamment des fibres de carbone constituées d'une multitude de fils ou filaments de carbone.

Ces machines comprennent classiquement une tête d'application de fibres comportant des moyens de guidage pour guider la ou les fibres vers la surface de drapage. Ces machines comprennent en outre des moyens de stockage de fibres tel qu'un cantre déporté, et des moyens d'acheminement pour acheminer des fibres desdits moyens de stockage vers la tête, et éventuellement un système de déplacement de la tête de drapage. Dans le cas d'une bande formée de plusieurs fibres, les moyens de guidage de la tête permettent d'amener vers la surface de drapage les fibres sous la forme d'une bande, dans laquelle les fibres sont disposées parallèlement sensiblement bord à bord. Pour un drapage au contact des fibres, ces machines, appelées classiquement machines de placement de fibres, comprennent une tête équipée d'un rouleau de compactage destiné à venir en contact contre la surface de drapage pour appliquer la bande, les moyens de guidage guidant les fibres vers le rouleau sous la forme d'une bande.

Les fibres appliquées peuvent être des fibres pré-imprégnées d'un polymère thermoplastique ou thermodurcissable, ou des fibres sèches munies d'un liant, classiquement appelé « binder », pour conférer un caractère collant aux fibres lors du drapage.

Dans le cas d'un drapage de fibres pré-imprégnées de polymère, la préforme, dite pré-imprégnée, obtenue après drapage, est par la suite durcie ou polymérisée par passage dans un four pour obtenir une pièce en matériau composite.

Dans le cas de fibres sèches avec liant, un polymère est injecté ou infusé dans la préforme, dite sèche, avant une étape de durcissement. Les préformes sèches avec liant comprennent une faible quantité de liant, généralement inférieure à 5 % en poids, permettant de maintenir la cohésion de la préforme, tout en autorisant son imprégnation ultérieure.

Pour le drapage de fibres sèches munies d'un liant, une première technique consiste à mettre en œuvre des fibres déjà revêtues d'un liant par le fournisseur de matière première. Il est proposé à ce jour de telles fibres, dites poudrées et/ou voilées, conditionnées en bobines, dans lesquelles les liants se présentent sous la forme de poudre et/ou d'un voile sur une surface ou sur chaque surface des fibres. Le liant est appliqué sur une large bande de fibres, la bande est ensuite refendue en plusieurs fibres calibrées à la largeur souhaitée pour leur utilisation dans une machine de drapage automatique. Cette technique a pour inconvénient de mettre en œuvre un produit coûteux, difficilement utilisable pour certaines applications, notamment dans le domaine automobile. Par ailleurs, lors de la refente, des filaments sont coupés sur les bords de fibre, ce qui engendre un encrassement important des machines.

Une deuxième solution consiste à réaliser une enduction du liant en ligne sur une fibre sèche au moyen d'une buse, en particulier une buse à lèvre, par exemple au niveau de la tête tel que décrit dans le document brevet FR2882681, ou au niveau du cantre tel que décrit dans le document FR3016827. Dans le document brevet FR2999973, il a été proposé d'appliquer le liant sous forme de fil sur les fibres, en particulier au niveau du cantre.

Le but de la présente invention est de proposer une solution alternative à celle proposée antérieurement.

A cet effet, la présente invention propose un procédé de réalisation de préformes, par drapage de fibres sur une surface de drapage, comprenant l'application d'un liant liquide ou pâteux sur au moins une fibre sèche plate continue, comprenant deux faces principales opposées, classiquement appelée mèches, de préférence unidirectionnelles, et le drapage de ladite fibre munie de liant au moyen d'une tête de drapage pour former une préforme, caractérisé en ce que l'application de liant sur une fibre est réalisée au moyen d'au moins une buse de fibérisation comprenant un orifice de décharge alimenté en liant liquide ou pâteux sous pression, et un ou plusieurs orifices d'injection alimentés en gaz sous pression, par exemple d'air comprimé, de sorte que ladite buse soit apte à délivrer le liant sous la forme d'un filament en spirale, les spires de filament se déposant sur une première face principale de la fibre défilant sous la buse pour obtenir une fibre munie de filaments de liant.

Selon l'invention, le liant est appliqué sur des fibres sèches au moyen d'une buse de fibérisation, les spires de filament se déposent sur la face principale de la fibre disposée en vis-à-vis de la buse, en particulier sous la forme de boucles plus ou moins régulières se chevauchant. Le procédé selon l'invention permet de draper des fibres sèches avec liant en partant d'une matière première peu onéreuse. L'utilisation de buses de fibérisation permet une application de liant simple et précise. Les filaments de liant forment une sorte de voile permettant l'infusion ultérieure de la préforme.

Les fibres sont de préférence unidirectionnelles et sont formées d'une multitude de fils ou filaments, par exemple des fibres de 12 à 50 K dans le cas du carbone, et des fibres de 1200 à 9600 Tex pour le verre. Les fibres présentent par exemple des largeurs de 3,175 mm; 6,35 mm ou 12,7 mm (d'un huitième de pouce, un quart de pouce ou un demi-pouce (1/8", 1/4" ou 1/2")). Dans la présente, le terme «fibres » désigne également des fibres de plus grande largeur, supérieure à un demi pouce, classiquement appelées bandes dans la technologie du placement.

Différents types de fibres sèches peuvent être mis en œuvre. A titre d'exemple non limitatif, les fibres sèches utilisées sont des fibres de carbone, des fibres de verre, des fibres d'aramide, des fibres de polyéthylène, et/ou des fibres naturelles, telles que par exemple des fibres de lin.

Le liant utilisé peut comprendre un ou plusieurs polymères thermodurcissables, par exemple un polymère époxyde, polyester, vinylester, phénolique, polyimide, ou bismaléimide, ou un ou plusieurs polymères thermoplastiques, par exemple un polyamide, polyester thermoplastique, polyéthersulfone, polyétheréthercétone, polyuréthane thermoplastique, époxyde thermoplastique, ou polyoléfine. Selon un mode de réalisation le liant est un copolyester thermoplastique.

Selon un mode de réalisation, lors de l'application de liant, les spires de filament se déposant sur la première face principale de la fibre se replient au niveau des bords longitudinaux de la fibre et se plaquent contre la deuxième face principale de la fibre, de manière à obtenir une fibre munie de filaments de liant sur chaque face principale. De manière surprenante, les inventeurs ont constaté que lorsque les spires présentent une largeur supérieure à la largeur de la fibre, les portions de spire dépassant des bords longitudinaux viennent se plaquer contre la deuxième face de la fibre le long des deux bords longitudinaux. Sans vouloir être lié par une quelconque théorie, les inventeurs supposent que le filament en spirale est projeté par la buse sur la première face principale et, sous l'effet de la vitesse de projection, les portions de spire dépassant des bords se plient le long des bords et se plaquent sur la face principale opposée à la buse. De préférence les fibres sèches passant devant la buse présentent au plus 12,7 mm (1/2") de large.

Le procédé selon l'invention permet ainsi d'obtenir une fibre sèche munie de filaments s'étendant sur les deux faces principales en passant par les bords longitudinaux, garantissant un maintien des différents filaments constituant la fibre, facilitant les opérations de drapage et permettant d'obtenir une bonne qualité de drapage. L'utilisation d'une fibre sèche munie de liant sur ses deux faces principales facilite le collage entre deux plis de la préforme et améliore au final la cohésion de la préforme résultante. Par ailleurs, le procédé selon l'invention permet d'appliquer le liant sur les deux faces principales au moyen d'une seule buse, et ainsi simplifie et limite l'encombrement du dispositif d'application de liant.

Selon un mode de réalisation, lors de l'application de liant, des portions de spires de filament provenant des deux bords longitudinaux de la fibre se plaquent contre la deuxième face principale en se superposant. La largeur des spires de filament est définie de sorte qu'elles viennent se superposer sur la deuxième face de la fibre, améliorant ainsi le maintien de la fibre.

Selon un mode de réalisation, après passage au niveau de la buse de fibérisation, la fibre passe dans un système de calibration et/ou de calandrage pour calibrer la fibre en largueur, et/ou comprimer la fibre en épaisseur, la fibre étant soumise à une pression sur chaque face principale.

Lors de ce calandrage, les filaments de liant appliqués sur la fibre, de préférence sur chaque face, sont écrasés contre la fibre et se lient aux filaments constituant la fibre, garantissant ainsi une bonne liaison du liant à la fibre. Cette calibration et calandrage juste après application du liant permet d'obtenir une fibre sèche calibrée, facilitant l'acheminement des fibres jusqu'à la tête de drapage, avec peu d'encrassement et assure une bonne qualité de drapage.

Selon un mode de réalisation, après application du liant, la fibre est munie de filaments de liant ayant un diamètre compris entre 0,02 mm à 0,10 mm, de préférence compris entre 0,04 et 0,06 mm.

Selon un mode de réalisation, après application du liant, la fibre munie de filaments de liant comprend 2 à 10% en poids de liant, la préforme obtenue après drapage étant soumise à une opération d'ajout de polymère.

Selon un mode de réalisation, l'application de liant est effectuée en ligne, le procédé comprenant l'acheminement d'au moins une fibre sèche depuis un système de stockage et de distribution jusqu'à la tête de drapage pour draper ladite fibre sur une surface de drapage, l'application de liant sur la fibre est effectué lors du drapage, dans le système de stockage et de distribution ou lors de l'acheminement de la fibre entre le système de stockage et la tête. Le drapage est réalisé à partir de fibres sèches et une application de liant est effectuée en ligne, au fur et à mesure du drapage, au moyen d'une ou plusieurs buses actionnées en fonction de la vitesse en fonction des fibres. De préférence, l'application de liant sur la ou les fibres est réalisée au niveau du système de stockage et de distribution des fibres, ledit procédé comprenant l'acheminement de la ou des fibres munies de liant jusqu'à la tête de drapage. De manière surprenante, les inventeurs ont remarqué que le drapage de fibres munies d'un liant appliqué en ligne permettait d'effectuer le drapage sans nécessiter de chauffage du liant au niveau de la tête, le liant venant d'être appliqué gardant un caractère collant qui est suffisant pour permettre l'adhésion de ladite fibre à la surface de drapage et/ou à une ou plusieurs fibres munies de liant préalablement drapées sur ladite surface de drapage.

Selon un mode de réalisation, l'acheminement est réalisé au moyen d'un tube flexible, dans le passage intérieur duquel passe la fibre. De manière surprenante, les inventeurs ont remarqué que les fibres venant d'être recouvertes de liant dans le cantre pouvait être acheminées dans des tubes, sans être détériorées et sans encrasser les tubes, tout en permettant un drapage sans chauffage du liant au niveau de la tête.

Selon un autre mode de réalisation, la fibre munie du liant est rembobinée en une bobine qui sera par la suite chargée dans le système de stockage et de distribution d'une machine de drapage pour réaliser l'opération de drapage.

Dans le cas d'une application en ligne, le procédé comprend le drapage de bandes formées d'une ou plusieurs fibres au moyen d'une tête de drapage, de préférence munie d'un rouleau d'application pour draper au contact ladite bande contre la surface de drapage, l'application de liant étant effectuée par plusieurs buses de fibérisation, chaque buse appliquant le liant de manière indépendante sur une seule fibre, lesdites buses pouvant être alimentées en liant par un système d'alimentation commun, chaque buse étant actionnée en fonction de la vitesse de défilement de la fibre défilant sous ladite buse.

Selon un mode de réalisation, la fibre munie du liant passe dans un système limiteur de tension juste avant son application au contact sur la surface d'application au moyen d'un rouleau d'application, ou rouleau de compactage, afin de limiter la tension de la fibre au niveau du rouleau d'application, ledit système limiteur de tension comprend au moins un cylindre sur lequel la fibre est apte à venir s'enrouler partiellement, et des moyens d'entraînement pour entraîner en rotation ledit cylindre, lesdits moyens d'entraînement étant asservis par l'unité de commande de la machine, de sorte que la vitesse périphérique du cylindre soit supérieure à la vitesse de défilement de la fibre au niveau du rouleau d'application.

L'utilisation d'un système limiteur de tension juste avant le drapage de la fibre permet de limiter, voire supprimer, l'effort de compactage lors du drapage et ainsi de réduire les risques de déplacement des fibres préalablement drapés, en particulier dans le cas du drapage d'une préforme sèche.

Selon un mode de réalisation, le drapage comprend la réalisation de plis de fibres superposés dans des orientations différentes, des plis comprenant des fibres adjacentes, non bord à bord, avec un espacement défini entre elles, afin de faciliter l'infusion ultérieure de la préforme, les écarts entre fibres des plis étant disposés de manière à former des canaux d'infusion dans l'épaisseur de la préforme pour l'infusion. Cet espacement entre fibres adjacentes peut être obtenu lors du drapage d'une bande de fibres, au moyen d'une tête appropriée et/ou d'un système de calibration et calandrage approprié, et/ou obtenue entre deux bandes de fibres adjacentes, en programmant cet espacement dans le logiciel avant drapage. Cet espacement est par exemple compris entre 0,5 et 4 mm, de préférence entre 1 et 3 mm.

La présente invention a également pour objet un procédé de fabrication de pièces en matériau composite, caractérisé en ce qu'il comprend
- la réalisation d'une préforme par drapage de fibres tel que décrit précédemment ;
- une étape d'imprégnation de polymère dans la préforme, ladite étape d'imprégnation comprenant
- dans le cas d'une préforme sèche, l'ajout d'un ou plusieurs polymères par infusion ou injection,
- ou dans le cas d'une préforme avec une quantité de liant destiné à former la matrice finale, le chauffage de la préforme pour imprégner dans l'ensemble de la préforme la ou les polymères formant le liant ; et, éventuellement
- une étape de durcissement.

Selon un premier mode de réalisation, le procédé selon l'invention comprend la réalisation de préformes sèches, comprenant l'application d'un liant sur des fibres sèches, pour former une préforme sèche comprenant moins de 10% en poids de liant, de préférence moins de 5% en poids de liant, ladite préforme sèche étant par la suite soumise à une opération d'imprégnation d'un polymère pour former une pièce en matériau composite.

Selon un second mode de réalisation, le procédé est un procédé de réalisation de préformes de type pré-imprégnées, comprenant l'application d'un liant formé d'un ou plusieurs polymères pour former une préforme pré-imprégnée comprenant au moins 30% en poids de liant, de préférence au moins 40% en poids de liant, la préforme pré-imprégnée étant par la suite soumise à une opération d'imprégnation, pour une imprégnation à cœur du liant dans les fibres, puis une opération de durcissement.

Les préforme seront de préférence drapées à plat à grandes vitesses, et soumises à une étape de formage pour former les préformes à leur forme finale souhaitée.

La présente invention a également pour objet une machine de drapage de fibres comprenant
- une tête de drapage comportant des moyens de guidage pour guider une ou plusieurs fibres vers une surface de drapage et de préférence un rouleau d'application destiné à venir en contact contre la surface de drapage,
- un système de stockage et de distribution pour stocker et distribuer au moins une fibre continue plate,
- des moyens d'acheminement pour acheminer la ou les fibres dudit système de stockage et distribution vers la tête de drapage, et
- des moyens d'application pour appliquer un liant sur la ou les fibres sèches,
caractérisée en ce que les moyens d'application de liant comprennent au moins une buse de fibérisation comprenant un orifice de décharge alimenté en liant liquide ou pâteux sous pression et un ou plusieurs orifices d'injection alimentés en gaz sous pression, de sorte que ladite buse soit apte à délivrer le liant sous la forme d'un filament en spirale, ladite buse étant commandée par un système de commande en fonction de la vitesse de défilement de la fibre en vis-à-vis de la buse, ladite buse étant disposée en amont de la tête de drapage, de préférence dans le système de stockage et de distribution de fibres.

La buse comprend par exemple une chambre alimentée en liant sous pression via un orifice d'alimentation et munie d'un orifice de décharge et d'un clapet monté mobile dans la chambre et actionné par des moyens d'actionnement entre une position fermée pour fermer l'orifice de décharge et une position ouverte pour délivrer le liant sous pression par son orifice de décharge.

Selon un mode de réalisation, la machine comprend un système de calibration et/ou de calandrage des fibres disposé en aval des moyens d'application, pour calibrer la fibre en largeur et/ou comprimer la fibre en épaisseur.

Selon un mode de réalisation, la tête de drapage est équipée d'un système limiteur de tension, en amont du système de guidage, apte à limiter la tension de la fibre ou des fibres.

La machine selon l'invention peut être :
- une machine de placement de fibres pour l'application au contact d'une seule fibre ou d'une bande large formée de plusieurs fibres, ou
- une machine pour l'application sans contact, par exemple une machine d'enroulement filamentaire pour l'application d'une fibre ou d'une bande formée d'une ou plusieurs fibres.

Dans le cas d'une machine de placement de fibres, la tête comprend un rouleau d'application pour le drapage au contact des fibres, ladite machine pouvant comprendre en outre un système de déplacement de la tête de drapage. Selon un mode de réalisation, le système de stockage et de distribution est disposé à distance de la tête de drapage, par exemple disposé au sol ou est monté sur un des éléments du système de déplacement de la tête.

L'invention sera mieux comprise, et d'autres buts, détails, caractéristiques et avantages apparaîtront plus clairement au cours de la description explicative détaillée qui va suivre de modes de réalisation particuliers de l'invention, en référence aux dessins schématiques annexés, sur lesquels :
- la figure 1 est une vue schématique de côté d'une machine de drapage de fibres selon un mode de réalisation ;
- la figure 2 est une vue schématique partielle agrandie du cantre de la machine de la figure 1, illustrant les moyens d'application de liant sur une fibre ;
- la figure 3 est une vue partielle schématique de la buse de fibérisation de la figure 2 ;
- les figures 4 et 5 sont respectivement des photos d'une fibre munie de liant selon l'invention, illustrant respectivement les filaments de liant sur la première face principale en vis-à-vis de la buse, et les filaments de liant se recouvrant sur la deuxième face principale de la fibre ; et,
- la figure 6 est une vue schématique d'une tête d'application de fibres selon une variante de réalisation.

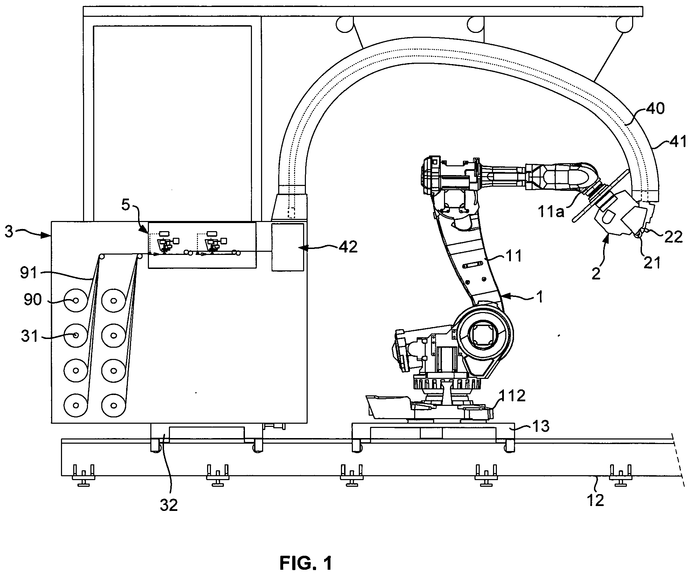

La figure 1 illustre de manière schématique une machine de placement de fibres selon l'invention, permettant le drapage au contact sur un moule d'une bande formée de plusieurs fibres. La machine comprend un système de déplacement 1 qui est formé ici d'un bras poly-articulé 11, du type robot poly-articulé six axes, connu en soi, monté mobile sur un rail linéaire 12 fixé au sol. Le bras poly-articulé 11 est fixé par son embase 112 sur un chariot 13 monté coulissant sur le rail 12. Une tête de placement 2 est montée au poignet d'extrémité 11a du bras poly-articulé. La tête comprend, de manière connue en soi, des moyens de guidage pour guider plusieurs fibres sous la forme d'une bande vers un rouleau d'application ou rouleau de compactage 21, le rouleau de compactage étant apte à venir en contact avec un moule pour appliquer la bande. La tête comprend en outre des moyens de coupe pour couper individuellement chaque fibre, des moyens de réacheminement pour réacheminer chaque fibre venant d'être coupée, afin de pouvoir à tout moment stopper et reprendre l'application d'une fibre, ainsi que choisir la largeur de la bande, et des moyens de blocage afin de bloquer une fibre venant d'être coupée. A titre d'exemple, la machine comprend une tête de drapage telle que décrite dans le document brevet WO2008/132299.

La machine est prévue ici pour le drapage de fibres 91 plate, également appelées mèches, par exemple de type fibres de carbone ou fibres de verre, conditionnées en bobines. Le système de stockage et de distribution comprend un cantre 3, pour recevoir des bobines de fibres sèches, et délivrer les fibres indépendamment les unes des autres. Chaque bobine est montée sur un mandrin 31, motorisé ou non. Le cantre est également monté sur un chariot suiveur 32, disposé sur le rail 12 et relié mécaniquement au chariot 13 portant le robot. Dans le mode de réalisation illustré, la machine et prévue pour le drapage d'une bande de huit fibres 91, le cantre comprenant huit bobines 90 de fibre.

Les moyens d'acheminement pour acheminer les fibres du cantre à la tête de placement sont formés ici de tubes flexibles, tels que décrits par exemple dans le document brevet WO2012/160270. Les tubes sont rassemblés en un faisceau, représenté schématiquement sous la référence 40, et sont placés dans le passage interne d'une gaine 41 flexible, éventuellement refroidie pour refroidir les fibres.

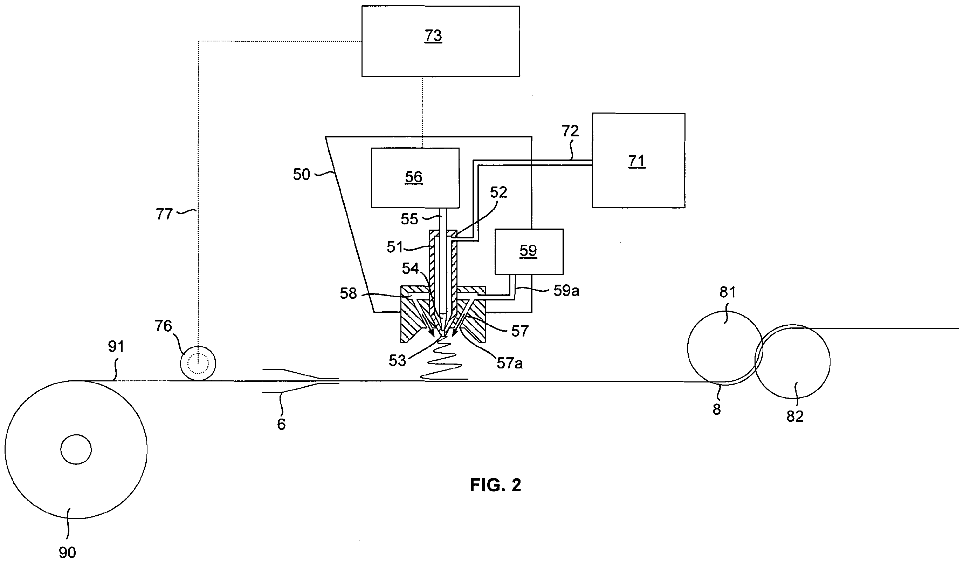

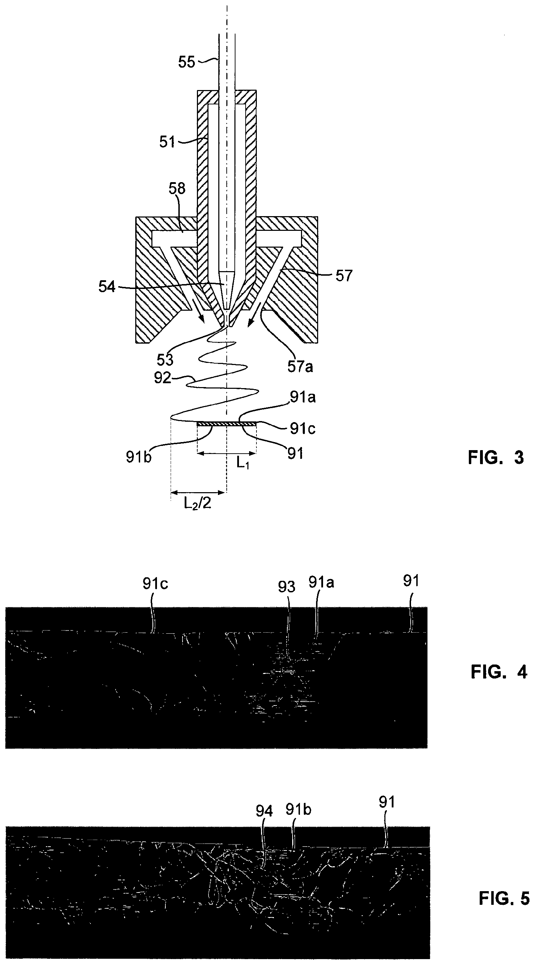

Selon l'invention, la machine est équipée de moyens 5 d'application de liant, disposés ici au niveau du cantre 3, et prévus pour appliquer par projection un liant sous forme liquide ou pâteuse sur les deux faces principales de chaque fibre sèche. En référence aux figures 2 et 3, les moyens d'application comprennent pour chaque fibre une buse 50 de fibérisation, la buse étant connectée à un système d'alimentation 71 alimentant plusieurs buses en liant sous pression.

Une buse est disposée au-dessus de chaque fibre 91 déroulée depuis sa bobine. Chaque buse de fibérisation 5, connue en soi, comprend une chambre 51 avec un orifice 52 d'alimentation pour sa connexion au système d'alimentation 71 via une conduite d'alimentation 72, et un orifice 53 de décharge. Un clapet 54 est monté mobile dans la chambre et est déplaçable entre une position fermée dans laquelle le clapet coopère avec la partie inférieure de la chambre, conformée en siège, pour fermer l'orifice de décharge, et une position ouverte dans laquelle le clapet est à distance du siège pour ouvrir l'orifice de décharge. Ce clapet est commandé en ouverture et en fermeture par un système d'actionnement comprenant une tige 55 qui s'étend sensiblement axialement dans la chambre et qui porte à son extrémité libre le clapet 54. Cette tige est apte à être manœuvrée en translation par des moyens d'actionnement 56 pour déplacer le clapet entre ses deux positions. Ces moyens d'actionnement, par exemple de type électrique ou pneumatique, sont asservis par un système de commande 73, tel qu'illustré par la ligne de commande représentée schématiquement sous la référence 74. Le système d'alimentation 71 permet d'alimenter chaque buse en liant sous pression, à une température à laquelle le liant présente une viscosité appropriée pour son application au moyen de la buse.

La buse comprend en outre des canaux d'injection 57 alimentés en air comprimé pour former des flux d'air en direction du filament sortant de l'orifice de décharge. Les canaux d'injection présentent des orifices d'injection 57a répartis à espace angulaire régulier autour de l'orifice de décharge. La buse présente par exemple huit canaux d'injection. Les canaux d'injection débouchent sur une chambre annulaire 58 connectée à une source d'air comprimé 59 par une conduite 59a. Les canaux d'injection sont disposés et orientés de sorte que le filament de liant sortant de l'orifice de décharge soit animé d'un mouvement circulaire et soit étiré et configuré en une spirale, tel qu'illustré sur les figures 2 et 3 sous la référence 92.

Les buses appliquent par projection, sans contact entre la buse et la fibre, le liant sur les fibres sous forme de filaments, les filaments venant sur les deux faces principales de la fibre. Chaque buse est réglée de sorte que les spires de filament se déposant sur la première face principale 91a en vis-à-vis de la buse présentent une largeur D2 supérieure à la largeur D1 de la fibre, tel qu'illustré à la figure 3. Les spires de filament ainsi projetées sur la première face principale présentent des portions de spire dépassant des bords longitudinaux 91c de la fibre qui se replient autour desdits bords et viennent se plaquer contre la deuxième face principale 91b de la fibre. Cette application de liant sur les deux faces est obtenue en réglant notamment, le flux d'air injecté, la pression et la température de liant dans la buse et la distance entre la buse et la fibre.

De préférence, les portions de spires de filament provenant d'un bord longitudinal viennent se superposer avec celles provenant de l'autre bord longitudinal. La fibre est ainsi munie sur chaque face principale de liant sous forme de filaments, les filaments d'une face principale se prolongeant sur l'autre face principale en passant par les bords longitudinaux. Ces filaments de liant ainsi appliqués permettent de maintenir les différents filaments constitutifs de la fibre.

A titre d'exemple, la buse présente un orifice de décharge d'environ 0,3 mm de diamètre. Le filament sortant de l'orifice de décharge est étiré par les flux d'air provenant des canaux d'injection, de sorte que la fibre soit munie sur ses deux faces principales de filaments d'environ 0,05 mm de diamètre.

Les photos des figures 4 et 5 illustrent un exemple de fibre obtenue après application de liant selon l'invention, la photo de la figure 4 montrant les filaments 93 sur la première face principale de la fibre qui était disposée en vis-à-vis de la buse, et la photo de la figure 5 illustre les filaments 94 sur la deuxième face principale de la fibre.

Le système de commande 73 est connecté à des capteurs pour recevoir une information représentative de la vitesse de défilement de chaque fibre. Chaque fibre passe par exemple sur un rouleau 76 équipé d'un codeur connecté, via une ligne représentée schématiquement sous la référence 77, au système de commande pour communiquer la vitesse de défilement de la fibre. Pour chaque fibre, le système de commande contrôle l'ouverture et la fermeture du clapet de buse associée à la fibre, en fonction de la vitesse de défilement de ladite fibre, pour appliquer en ligne la quantité de liant souhaité au fur et à mesure de l'avancement de la fibre et de son application par la tête de drapage.

En amont des moyens d'application, chaque fibre sèche passe dans un premier système de calibration 6, permettant de calibrer les fibres à une largeur souhaitée avant l'application de liant. Ce système de calibration comprend par exemple pour chaque fibre un tube tronconique avec une section rectangulaire qui diminue d'amont en aval, la largeur de la section du tube à son extrémité aval correspondant à la largeur de fibre souhaitée.

En aval des moyens d'application, chaque fibre passe dans un système de calibration et de calandrage 8 permettant de calibrer la fibre en largeur et de comprimer la fibre en épaisseur. Ce système comprend par exemple pour chaque fibre deux roues de calandrage entre lesquelles passe la fibre. Une première roue 81 est munie d'une gorge annulaire de section rectangulaire, dont la largeur correspond à la largeur de fibre souhaitée. Une seconde roue 82 est munie d'une nervure s'insérant dans la gorge de la première roue. La nervure insérée dans la gorge formant un passage dont la section correspond à la section de fibre souhaitée. Lors du passage de la fibre entre les deux roues, les filaments de liant sont écrasés contre les filaments constitutifs de la fibre, assurant ainsi une accroche mécanique des filaments de liant à ceux de la fibre. A titre d'exemple, les filaments de liant de 0,05 mm de diamètre appliqués par la buse, présentent après calandrage une section d'environ 0,07 mm.

La présence de filament de liant sur chaque face principale de la fibre combinée à cette étape de calandrage permet d'obtenir une fibre sèche calibrée, qui facilite l'acheminement de la fibre jusqu'à la tête et dans la tête, avec peu d'encrassement, et assure une qualité de drapage.

Le cantre peut également être équipé d'un système limiteur de tension 42 (Fig. 1), tel que décrit dans le document brevet WO2006/092514, dans lequel passe les fibres en sortie des moyens d'application, afin de limiter la tension dans la fibre avant leur entrée dans les tubes d'acheminement.

A titre d'exemple, les fibres placées dans le cantre sont des fibres de carbone sèches, constituées d'une multitude de filaments de carbone et d'une faible quantité de résine d'ensimage, de l'ordre de 0,2% en poids. La machine est utilisée pour réaliser une préforme sèche, après application par projection du liant sous forme de filaments sur les deux faces principales via les buses de fibérisation, chaque fibre comprend environ 5% en poids de liant. Le liant comprend par exemple un copolyester thermoplastique. Le liant peut en outre comprendre un ou plusieurs agents ou charges fonctionnelles, pour conférer à la préforme différentes propriétés mécaniques et/ou électriques, par exemple des agents ou charges améliorant sa conduction électrique, sa perméabilité pour l'infusion, sa formabilité, et/ou sa tenue au choc.

Une préforme sèche peut être obtenue par drapage de plusieurs plis superposés au moyen de la tête de drapage, le liant étant appliqué sur les fibres au fur et à mesure de l'application des fibres par la tête. Le drapage étant effectué avec le liant fraichement appliqué sur les fibres, le liant n'a pas complètement cristallisé, et garde un caractère collant. Ainsi, il n'est pas nécessaire de chauffer le liant au niveau de la tête pour garantir la cohésion de la préforme.

Après réalisation d'une préforme sèche, la préforme sèche peut être soumise à une opération d'infusion ou d'injection d'un polymère d'infusion ou d'injection, thermoplastique ou thermodurcissable, puis une opération de durcissement pour obtenir une pièce composite. Cette opération de durcissement consistant une opération dite de consolidation dans le cas de polymère thermoplastique, et en une cuisson dans le cas d'un polymère thermodurcissable.

Une préforme sous forme de plaque aux dimensions souhaitées peut être obtenue par drapage de plusieurs plis. La préforme peut alors être soumises à une opération de formage, de préférence à chaud, le liant appliqué aux fibres autorisant une déformation de la préforme et son maintien en forme. La préforme peut être placée dans un outillage de formage correspondant à la forme finale de la pièce composite souhaitée dans lequel sera réalisé l'opération de formage puis l'opération d'imprégnation de polymère par injection ou infusion.

Selon un autre exemple, la machine est utilisée pour la réalisation de préformes pré-imprégnées comprenant au moins 40% en poids de liant, le liant formant alors la matrice polymère de la pièce finale. La préforme obtenue après drapage peut ensuite être soumise à une opération de chauffage et de mise en pression pour imprégner le polymère de manière homogène dans l'ensemble de la préforme, puis une opération de durcissement pour obtenir une pièce composite.

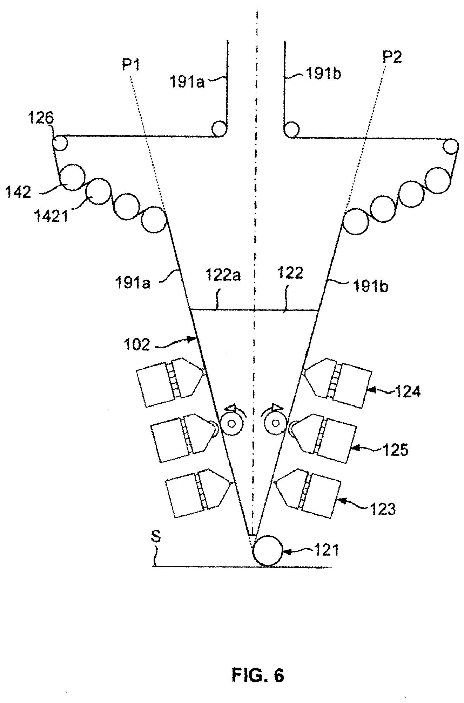

La figure 6 illustre une tête de placement de fibre selon une variante de réalisation. La tête de placement 102 comprend un rouleau d'application 121, un système de guidage 122 permettant de guider les fibres en direction du rouleau sous la forme de deux nappes de fibres 191a 191b disposés selon deux plans P1, P2 de guidage, pour former une bande de fibres dans laquelle les fibres sont disposées sensiblement bord à bord. Ce système de guidage comprend par exemple des canaux de guidage, dans lesquels passent les fibres, formés à l'interface d'assemblage d'une pièce centrale 122a, en forme de coin, et de deux plaques latérales (non représentées). Le système de guidage est monté sur une structure support (non représentée) par laquelle la tête est assemblée au poignet du robot décrit précédemment. En variante, la tête est fixe et la surface de drapage du moule est apte à être déplacée par rapport à la tête pour effectuer les opérations de drapage. La tête comprend en outre, de part et d'autre du système de guidage, des moyens de coupe 123, des moyens de blocage 124 et des moyens de réacheminement 125.

La tête est équipée d'un système limiteur de tension 142 disposé en amont du système de guidage 122 dans lequel les fibres entrant dans la tête passent afin de limiter, voire supprimer la tension dans les fibres appliquée par le rouleau, et permettre ainsi de réduire, voire supprimer l'effort de compactage appliqué par le rouleau d'application. Ce système limiteur de tension est avantageusement utilisé dans le cas de préformes épaisses, comprenant de nombreux plis et/ou obtenues à partir de fibres ayant un titre important, en particulier dans le cas de fibre de verre. La tension dans les fibres au niveau du rouleau est par exemple comprise entre 0 et 100 g, et l'effort de compactage est compris entre 0 et 10 N/mm, de préférence entre 0 et 5 N/mm.

Le système limiteur de tension est par exemple du type décrit dans le document brevet WO2006/092514 précité. Pour chaque nappe de fibre, le système limiteur de tension comprend un ou plusieurs cylindres 1421 parallèles entre eux, par exemple au nombre de quatre, sur lesquels les fibres de la nappe s'enroule partiellement. Les cylindres sont entraînés positivement en rotation par des moyens d'entraînement. Le système limiteur de tension est monté sur la structure support de la tête. Les fibres entrant dans la tête sont orientées vers les cylindres via des poulies de renvoi 126. En sortie de cylindres, les fibres entrent dans le système de guidage 122. Lesdits moyens d'entraînement sont asservis par l'unité de commande de la machine, de sorte que les vitesses périphériques des cylindres soient supérieures aux vitesses de défilement des fibres au niveau du rouleau d'application, pour exercer un effort de traction sur les fibres, et ainsi limiter la tension d'appel des fibres au niveau du rouleau d'application à une valeur sensiblement constante, quelle que soit la vitesse de défilement des fibres. Tel que décrit dans le document précité des courroies peuvent être montées autour de chaque cylindre, de sorte qu'une courroie vienne s'intercaler entre chaque fibre et le cylindre, chaque courroie étant apte à adhérer à une fibre et à être entraînée plus ou moins par le cylindre en fonction de la pression exercée par la fibre sur la courroie, ladite pression étant proportionnelle à la tension d'appel sur la fibre. Selon un autre mode de réalisation, le système limiteur de tension comprend pour chaque nappe, un seul cylindre motorisé, avec ou sans courroie.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention tel que limité par les revendications.

## Revendications

1. Procédé de réalisation de préformes, par drapage de fibres sur une surface de drapage, comprenant
- l'application d'un liant sur au moins une fibre (91) sèche plate continue, comprenant deux faces principales (91a, 91b) opposées, et
- le drapage de ladite fibre munie de liant au moyen d'une tête de drapage pour former une préforme,
**caractérisé en ce que** l'application de liant sur une fibre est réalisée au moyen d'au moins une buse de fibérisation (50) comprenant un orifice de décharge (53) alimenté en liant liquide ou pâteux, et un ou plusieurs orifices d'injection (57) alimentés en gaz sous pression, de sorte que ladite buse soit apte à délivrer le liant sous la forme d'un filament en spirale (92), les spires de filament se déposant sur une première face principale (91a) de la fibre défilant sous la buse pour obtenir une fibre munie de filaments (93, 94) de liant.

2. Procédé selon la revendication 1, **caractérisé en ce que** lors de l'application de liant, les spires de filament se déposant sur la première face principale (91a) de la fibre (91) se replient au niveau des bords longitudinaux (91c) de la fibre et se plaquent contre la deuxième face principale (91b) de la fibre, de manière à obtenir une fibre munie de filaments de liant (93, 94) sur chaque face principale.

3. Procédé selon la revendication 2, **caractérisé en ce que** lors de l'application de liant, des portions de spires de filament provenant des deux bords longitudinaux (91c) de la fibre (91) se plaquent contre la deuxième face principale (91b) en se superposant.

4. Procédé selon l'une des revendications 1 à 3, **caractérisé en ce que** la fibre, après passage au niveau de la buse de fibérisation, passe dans un système de calibration et/ou de calandrage (8) pour calibrer la fibre en largueur et/ou comprimer la fibre en épaisseur.

5. Procédé selon l'une des revendications 1 à 4, **caractérisé en ce qu'**après application du liant, la fibre est munie de filaments de liant ayant un diamètre compris entre 0,02 mm à 0,10 mm.

6. Procédé selon l'une des revendications 1 à 5, **caractérisé en ce qu'**après application du liant, la fibre munie de filaments de liant comprend 2 à 10% en poids de liant.

7. Procédé selon l'une des revendications 1 à 6, **caractérisé en ce que** l'application de liant est effectuée en ligne, le procédé comprenant l'acheminement d'au moins une fibre sèche (91) depuis un système de stockage et de distribution (3) jusqu'à la tête de drapage (2) pour draper ladite fibre sur une surface de drapage, l'application de liant sur la fibre est effectué lors du drapage, dans le système de stockage et de distribution ou lors de l'acheminement de la fibre entre le système de stockage et la tête de drapage.

8. Procédé selon la revendication 7, **caractérisé en ce qu'**il comprend le drapage de bandes formées d'une ou plusieurs fibres au moyen d'une tête de drapage, l'application de liant étant effectuée par plusieurs buses de fibérisation, chaque buse appliquant le liant de manière indépendante sur une seule fibre.

9. Procédé selon la revendication 7, **caractérisé en ce que** la fibre munie du liant passe dans un système limiteur de tension (142) juste avant son application sur la surface d'application au moyen d'un rouleau d'application (121), afin de limiter la tension de la fibre au niveau du rouleau, ledit système limiteur de tension comprend au moins un cylindre (1421) sur lequel la fibre est apte à venir s'enrouler partiellement, et des moyens d'entraînement pour entraîner en rotation ledit cylindre, lesdits moyens d'entraînement étant asservis par l'unité de commande de la machine, de sorte que la vitesse périphérique du cylindre soit supérieure à la vitesse de défilement de la fibre au niveau du rouleau d'application.

10. Procédé selon l'une des revendications 1 à 9, **caractérisé en ce que** le drapage comprend la réalisation de plis de fibres superposés dans des orientations différentes, des plis comprenant des fibres adjacentes, avec un espacement défini entre elles.

11. Procédé de fabrication de pièces en matériau composite, **caractérisé en ce qu'**il comprend
- la réalisation d'une préforme par drapage de fibres selon l'une des revendications 1 à 10 ;
- une étape d'imprégnation de polymère dans la préforme, ladite étape d'imprégnation comprenant
- l'ajout d'un ou plusieurs polymères par infusion ou injection,
- ou le chauffage de la préforme pour imprégner dans l'ensemble de la préforme la ou les polymères formant le liant.

12. Machine de drapage de fibres comprenant
- une tête (2, 102) de drapage comportant des moyens de guidage (122) pour guider une ou plusieurs fibres (91) vers une surface de drapage,
- un système (3) de stockage et de distribution pour stocker et distribuer au moins une fibre continue plate (91),
- des moyens d'acheminement (40) pour acheminer la ou les fibres dudit système de stockage et distribution vers la tête de drapage, et
- des moyens d'application (5) pour appliquer un liant sur la ou les fibres sèches,
**caractérisée en ce que** les moyens d'application de liant comprennent au moins une buse de fibérisation (50) comprenant un orifice de décharge (53) alimenté en liant et un ou plusieurs orifices d'injection (57a) alimentés en gaz sous pression, de sorte que ladite buse soit apte à délivrer le liant sous la forme d'un filament en spirale (92), ladite buse étant commandée par un système de commande (73) en fonction de la vitesse de défilement de la fibre, ladite buse étant disposée en amont de la tête de drapage.

13. Machine selon la revendication 12, **caractérisée en ce qu'**elle comprend un système de calibration et/ou de calandrage des fibres (8) disposé en aval des moyens d'application, pour calibrer la fibre en largeur et/ou comprimer la fibre en épaisseur.

14. Machine selon la revendication 12 ou 13, **caractérisée en ce que** la tête de drapage (102) est équipée d'un système limiteur de tension (142), en amont du système de guidage, apte à limiter la tension de la fibre ou des fibres.

## Patentansprüche

1. Verfahren zur Herstellung von Vorformlingen durch Auflegen von Fasern auf eine Auflagefläche, umfassend
- das Auftragen eines Bindemittels auf mindestens eine kontinuierliche flache trockene Faser (91), die zwei gegenüberliegende Hauptflächen (91a, 91b) umfasst, und
- das Auflegen der mit Bindemittel ausgerüsteten Faser mittels eines Auflagekopfs, um einen Vorformling zu bilden,
**dadurch gekennzeichnet, dass** das Auftragen von Bindemittel auf eine Faser mittels mindestens einer Fiberisierungsdüse (50) durchgeführt wird, umfassend eine Austrittsöffnung (53), die mit flüssigem oder pastösem Bindemittel versorgt wird, und eine oder mehrere Einspritzöffnungen (57), die mit Druckgas versorgt werden, so dass die Düse imstande ist, das Bindemittel in Form eines spiraligen Filaments (92) bereitzustellen, wobei sich die Filamentspiralen auf einer ersten Hauptfläche (91a) der Faser ablagern, die sich unter der Düse vorbeibewegt, um eine mit Bindemittelfilamenten (93, 94) ausgerüstete Faser zu erhalten.

2. Verfahren nach Anspruch 1, **dadurch gekennzeichnet, dass** sich die Filamentspiralen, die sich auf der ersten Hauptfläche (91a) der Faser (91) ablagern, beim Auftragen von Bindemittel im Bereich der Längsränder (91c) der Faser falten und sich an die zweite Hauptfläche (91b) der Faser anschmiegen, so dass man eine Faser erhält, die auf jeder Hauptfläche mit Bindemittelfilamenten (93, 94) ausgerüstet ist.

3. Verfahren nach Anspruch 2, **dadurch gekennzeichnet, dass** beim Auftragen von Bindemittel Abschnitte von Filamentspiralen, die von den zwei Längsrändern (91c) der Faser (91) kommen, an die zweite Hauptfläche (91b) anschmiegen, indem sie sich übereinanderlagern.

4. Verfahren nach einem der Ansprüche 1 bis 3, **dadurch gekennzeichnet, dass** die Faser nach Durchgang im Bereich der Fiberisierungsdüse in ein Kalibrierungs- und/oder Kalandersystem (8) gelangt, um die Faser in der Breite zu kalibrieren und/oder die Faser in der Stärke zu komprimieren.

5. Verfahren nach einem der Ansprüche 1 bis 4, **dadurch gekennzeichnet, dass** die Faser nach dem Auftragen des Bindemittels mit Bindemittelfilamenten ausgerüstet ist, die einen Durchmesser haben, der zwischen 0,02 mm bis 0,10 mm liegt.

6. Verfahren nach einem der Ansprüche 1 bis 5, **dadurch gekennzeichnet, dass** die mit Bindemittelfilamenten ausgerüstete Faser nach dem Auftragen des Bindemittels 2 bis 10 Gew.-% Bindemittel umfasst.

7. Verfahren nach einem der Ansprüche 1 bis 6, **dadurch gekennzeichnet, dass** das Auftragen von Bindemittel in-line erfolgt, wobei das Verfahren die Beförderung mindestens einer trockenen Faser (91) von einem Lager- und Verteilungssystem (3) zum Auflagekopf (2) umfasst, um die Faser auf eine Auflagefläche aufzulegen, wobei das Auftragen von Bindemittel auf die Faser beim Auflegen im Lager- und Verteilungssystem oder bei der Beförderung der Faser zwischen dem Lagersystem und dem Auflagekopf erfolgt.

8. Verfahren nach Anspruch 7, **dadurch gekennzeichnet, dass** es das Auflegen von aus einer oder mehreren Fasern geformten Bändern mittels eines Auflagekopfs umfasst, wobei das Auftragen von Bindemittel durch mehrere Fiberisierungsdüsen erfolgt, wobei jede Düse das Bindemittel unabhängig auf eine einzige Faser aufträgt.

9. Verfahren nach Anspruch 7, **dadurch gekennzeichnet, dass** die mit Bindemittel ausgerüstete Faser direkt vor ihrem Auftragen auf die Auftragsfläche mittels einer Auftragswalze (121) in ein Spannungsbegrenzungssystem (142) gelangt, um die Spannung der Faser im Bereich der Walze zu begrenzen, wobei das Spannungsbegrenzungssystem mindestens einen Zylinder (1421) umfasst, auf den die Faser imstande ist, sich teilweise zu wickeln, und Antriebsmittel, um den Zylinder rotatorisch anzutreiben, wobei die Antriebsmittel von der Steuereinheit der Maschine derart gesteuert werden, dass die periphere Geschwindigkeit des Zylinders höher als die Bewegungsgeschwindigkeit der Faser im Bereich der Auftragswalze ist.

10. Verfahren nach einem der Ansprüche 1 bis 9, **dadurch gekennzeichnet, dass** das Auflegen die Herstellung von übereinanderliegenden Faserfalten in verschiedenen Richtungen umfasst, wobei Falten benachbarte Fasern mit einem festgelegten Abstand zueinander umfassen.

11. Verfahren zur Herstellung von Teilen aus Verbundmaterial, **dadurch gekennzeichnet, dass** es umfasst
- das Herstellen eines Vorformlings durch Auflegen von Fasern nach einem der Ansprüche 1 bis 10;
- einen Schritt des Polymerimprägnierens im Vorformling, wobei der Schritt des Imprägnierens umfasst
- das Hinzufügen von einem oder mehreren Polymeren durch Infusion oder Einspritzen,
- oder das Erwärmen des Vorformlings, um das oder die Polymere, die das Bindemittel bilden, im gesamten Vorformling zu imprägnieren.

12. Maschine für das Auflegen von Fasern, umfassend
- einen Auflagekopf (2, 102), aufweisend Führungsmittel (122), um eine oder mehrere Fasern (91) zu einer Auflagefläche zu führen,
- ein Lager- und Verteilungssystem (3), um mindestens eine kontinuierliche flache Faser (91) zu lagern und zu verteilen,
- Beförderungsmittel (40), um die Faser(n) vom Lager- und Verteilungssystem zum Auflagekopf zu befördern, und
- Auftragsmittel (5), um ein Bindemittel auf die trockene(n) Faser(n) aufzutragen,
**dadurch gekennzeichnet, dass** die Auftragsmittel von Bindemittel mindestens eine Fiberisierungsdüse (50) umfassen, umfassend eine Austrittsöffnung (53), die mit Bindemittel versorgt wird, und eine oder mehrere Einspritzöffnungen (57a), die mit Druckgas versorgt werden, so dass die Düse imstande ist, das Bindemittel in Form eines spiraligen Filaments (92) bereitzustellen, wobei die Düse von einem Steuersystem (73) in Abhängigkeit von der Bewegungsgeschwindigkeit der Faser gesteuert wird, wobei die Düse dem Auflagekopf vorgelagert angeordnet ist.

13. Maschine nach Anspruch 12, **dadurch gekennzeichnet, dass** sie ein den Auftragsmitteln nachgelagertes Faserkalibrierungs- und/oder -kalandersystem (8) umfasst, um die Breite der Faser zu kalibrieren und/oder die Stärke der Faser zu komprimieren.

14. Maschine nach Anspruch 12 oder 13, **dadurch gekennzeichnet, dass** der Auflagekopf (102) mit einem dem Führungssystem vorgelagerten Spannungsbegrenzungssystem (142) ausgestattet ist, das imstande ist, die Spannung der Faser(n) zu begrenzen.

## Claims

1. Method for producing preforms, by layup of fibres on a layup surface, comprising
- the application of a binder on at least one continuous flat dry fibre (91), comprising two opposite main faces (91a, 91b), and
- the layup of said fibre provided with binder by means of a layup head in order to form a preform,
**characterised in that** the application of binder on a fibre is carried out by means of at least one fiberising nozzle (50) comprising a discharge orifice (53) supplied with liquid or pasty binder, and one or several injection orifices (57) supplied with pressurized gas, in such a way that said nozzle is able to deliver the binder in the form of a spiral filament (92), the spirals of filament being deposited on a first main face (91a) of the fibre running underneath the nozzle in order to obtain a fibre provided with filaments (93, 94) of binder.

2. Method according to claim 1, **characterised in that** during the application of binder, the spirals of filament that are deposited on the first main face (91a) of the fibre (91) fold at the longitudinal edges (91c) of the fibre and flatten against the second main face (91b) of the fibre, in such a way as to obtain a fibre provided with filaments of binder (93, 94) on each main face.

3. Method according to claim 2, **characterised in that** during the application of binder, portions of spirals of filament coming from the two longitudinal edges (91c) of the fibre (91) flatten against the second main face (91b) by superimposing on one another.

4. Method according to one of claims 1 to 3, **characterised in that** the fibre, after passing at the fiberising nozzle, passes in a calibration and/or calendering system (8) in order to calibrate the fibre in width and/or compress the fibre in thickness.

5. Method according to one of claims 1 to 4, **characterised in that** after application of the binder, the fibre is provided with filaments of binder that have a diameter between 0.02 mm to 0.10 mm.

6. Method according to one of claims 1 to 5, **characterised in that** after application of the binder, the fibre provided with filaments of binder comprises 2 to 10% by weight of binder.

7. Method according to one of claims 1 to 6, **characterised in that** the application of binder is carried out on line, with the method comprising the conveying of at least one dry fibre (91) from a storage and distribution system (3) to the layup head (2) in order to layup said fibre on a layup surface, the application of binder on the fibre is carried out during the layup, in the storage and distribution system or during the conveying of the fibre between the storage system and the layup head.

8. Method according to claim 7, **characterised in that** it comprises the layup of strips formed from one or several fibres by means of a layup head, with the application of binder being carried out by several fiberising nozzles, with each nozzle applying the binder independently on a single fibre.

9. Method according to claim 7, **characterised in that** the fibre provided with binder passes in a tension limiting system (142) immediately before the application thereof on the application surface by means of an application roller (121), so as to limit the tension of the fibre at the roller, said tension limiting system comprises at least one cylinder (1421) on which the fibre is able to be wound partially, and driving means for driving said cylinder in rotation, said driving means being controlled by the control unit of the machine, in such a way that the peripheral speed of the cylinder is greater than the running speed of the fibre at the application roller.

10. Method according to one of claims 1 to 9, **characterised in that** the layup comprises the production of plies of fibres superimposed in different orientations, plies comprising adjacent fibres, with a defined gap between them.

11. Method for manufacturing composite material parts, **characterised in that** it comprises
- the production of a preform by layup of fibres according to one of claims 1 to 10;
- a step of impregnating of polymer in the preform, said step of impregnating comprising
- the adding of one or several polymers by infusion or injection,
- or the heating of the preform in order to impregnate in the entire preform the polymer or polymers forming the binder.

12. Fibre layup machine comprising
- a layup head (2, 102) comprising guiding means (122) for guiding one or several fibres (91) to a layup surface,
- a storage and distribution system (3) for storing and distributing at least one flat continuous fibre (91),
- conveying means (40) for conveying the fibre or fibres from said storage and distribution system to the layup head, and
- application means (5) for applying a binder on the dry fibre or fibres,
**characterised in that** the binder application means comprise at least one fiberising nozzle (50) comprising a discharge orifice (53) supplied with binder and one or several injection orifices (57a) supplied with pressurized gas, in such a way that said nozzle is able to deliver the binder in the form of a spiral filament (92), said nozzle being controlled by a control system (73) according to the running speed of the fibre, said nozzle being arranged upstream of the layup head.

13. Machine according to claim 12, **characterised in that** it comprises a fibre calibration and/or calendering system (8) arranged downstream of the application means, in order to calibrate the fibre in width and/or compress the fibre in thickness.

14. Machine according to claim 12 or 13, **characterised in that** the layup head (102) is provided with a tension limiting system (142), upstream of the guiding system, able to limit the tension of the fibre or of the fibres.
